# EUROPEAN PATENT APPLICATION

(11) **EP 3 967 829 A1**
(43) Date of publication of application: **16.03.2022**
(21) Application number: 20897284.4
(22) Date of filing: 23.11.2020
(51) Int. Cl.: E04F 15/02, G09G 3/32, G09F 9/33

(54) **FLOOR TILE SCREEN CONTROL DEVICE**

(30) Priority: 02.12.2019 CN 201911214756
(71) Applicant: Shenzhen Gloshine Technology Co., Ltd., Guangdong 518117 (CN)
(72) Inventor: ZHANG, Xianfeng, Shenzhen, Guangdong 518117 (CN); ZHANG, Yongjun, Shenzhen, Guangdong 518117 (CN); LI, Guoqiang, Shenzhen, Guangdong 518117 (CN)
(74) Representative: De Arpe Tejero, Manuel
(86) International application number: PCT/CN2020/130750
(87) International publication number: WO 2021/109884

(57) **Abstract**

The application relates to the technical field of control circuits and provides a control device for floor tile screen, which comprises a sensor chip, a switch module, a signal processing module and a light panel control module connected in sequence; wherein a plurality of sensor chips are arranged, and the plurality of sensor chips are arranged on each light panel, the light panel control module is connected with the light panel; the sensor chip is used for generating a contact signal according to a contact strength of the light panel; the switch module is used for switching the contact signal received by each sensor chip according to a selection signal generated; the signal processing module is used for receiving, buffering and identifying the contact signal so as to generate an aggregated signal containing position and contact state of each sensor chip; the light panel control module is used for controlling each light panel to display visuals according to the aggregated signal; and a light panel control circuit is formed by the plurality of sensor chips, switch module, signal processing module and light panel control module. The implementation of the application can solve the problem that the control process of the existing floor tile screen is complicated.

## Description

This application claims the priority of the Chinese patent application filed with China Patent Office on December 2, 2019, with the application number of 201911214756.5 and the title of "A Control Device for Floor Tile Screen", the contents of which are incorporated herein by reference in their entirety.

### Technical field

The application relates to the technical field of control circuits, in particular to a control device for floor tile screen.

### Background

With the rapid development of touch technology in recent years, LED interactive floor tile screens have emerged, which can interact with people. The realization process of LED interactive floor tile screen is to set a pressure sensor chip or an infrared sensor chip on the floor tile. When people interact with the floor tile screen, these sensor chips sense people's position and feed their trigger information back to the main controller, and then the main controller outputs the corresponding display effect after logical judgment.

The applicant realizes that the display area of a single LED tile screen is limited at present. When using LED tile screens, it is necessary to splice multiple LED tile screens to obtain a larger display area. However, the circuit of the floor tile screen composed of multiple light panels adopts multiple micro-processing units, which need to work in coordination so that each light panel in the floor tile screen can display complete visuals together, but this control process is complicated.

To sum up, the floor tile screen in the prior art has the problem of complicated control process.

### Summary

The embodiments of the application provide a control device for floor tile screen, which aims to solve the problem that the control process of the floor tile screen in the prior art is complicated.

The application is realized by providing a control device for floor tile screen, comprising: a sensor chip, a switch module, a signal processing module and a light panel control module connected in sequence; wherein a plurality of sensor chips are arranged, and the plurality of sensor chips are arranged on each light panel, the light panel control module is connected with the light panel;
the sensor chip is used for generating a contact signal according to a contact strength of the light panel; the switch module is used for switching the contact signal received by each sensor chip according to a selection signal generated; the signal processing module is used for receiving, buffering and identifying the contact signal so as to generate an aggregated signal containing position and contact state of each sensor chip; the light panel control module is used for controlling each light panel to display visuals according to the aggregated signal; and
a light panel control circuit is formed by the plurality of sensor chips, the switch module, the signal processing module and the light panel control module.

The application provides a control device for floor tile screen, which adopts a plurality of sensor chips, a switch module, a signal processing module and a light panel control module, the switch module generates a selection signal. And contact signals generated by the plurality of sensor chips of the light panel are sequentially sent to the signal processing module, which receives, buffers and identifies the contact signals. Then the position and contact state of each sensor chip are obtained to generate an aggregated signal. The light panel control module controls each light panel to display visuals according to the aggregated signal, so that different display effects can be realized according to the contact state of each sensor chip. In this application, the signal processing module and the switch module are used to process the contact signal of each sensor chip, thus solving the problem that the control process of the floor tile screen in the prior art is complicated.

Details of one or more embodiments of the present application are set forth in the following drawings and description, and other features and advantages of the present application would become apparent from the specification, drawings and claims.

### Brief description of drawings

In order to illustrate the technical solutions of the embodiments of this application more clearly, the drawings used in the description of the embodiments of this application would be briefly introduced below. Obviously, the drawings in the following description are only some embodiments of this application, and for those of ordinary skill in the field, other drawings could be obtained according to these drawings without any creative effort.
Fig. 1 is a schematic diagram of modules of a control device for floor tile screen according to an embodiment of the present application;
Fig. 2 is a structural schematic diagram of a control device for floor tile screen according to an embodiment of the present application;
Fig. 3 is another structural schematic diagram of a control device for floor tile screen according to an embodiment of the present application.

Reference signs in the description are as follows:
1. Light panel; 21. Sensor chip; 22. Switch module; 23. Signal processing module; 24. Light panel control module.

### Detailed description of disclosed embodiments

In order to make the purpose, technical solutions and advantages of this application clearer, the technical solutions in the embodiments of this application will be described clearly and completely with reference to the drawings in the embodiments of this application. Obviously, the described embodiments are only part of the embodiments of this application, not all of them. Based on the embodiments of this application, all other embodiments obtained by those of ordinary skill in the art without creative efforts shall belong to the protection scope of this application. In the following description, the same reference sign indicates a same component, and repeated descriptions are omitted. In addition, the drawings are only schematic, the size, proportion or shape of the components may be different from the actual ones.

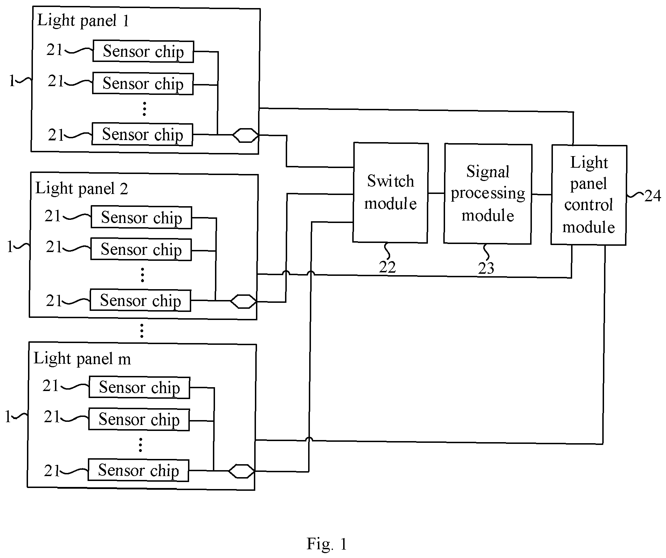

As shown in Fig. 1, the control device for floor tile screen provided by an embodiment of the present application comprises:
a sensor chip 21, a switch module 22, a signal processing module 23 and a light panel control module 24 connected in sequence; wherein a plurality of sensor chips 21 are arranged, and the plurality of sensor chips 21 are arranged on each light panel 1, the light panel control module 24 is connected with the light panel 1;
the sensor chip 21 is used for generating a contact signal according to a contact strength of the light panel 1; the switch module 22 is used for switching the contact signal received by each sensor chip 21 according to a selection signal generated; the signal processing module 23 is used for receiving, buffering and identifying the contact signal so as to generate an aggregated signal containing position and contact state of each sensor chip 21; the light panel control module 24 is used for controlling each light panel 1 to display visuals according to the aggregated signal; and
a light panel control circuit is formed by the plurality of sensor chips 21, the switch module 22, the signal processing module 23 and the light panel control module 24.

Each light panel 1 is provided with a plurality of sensor chips 21, and each sensor chip 21 is connected with a switch module 22. It should be noted that the schematic diagram of modules of Fig. 1 only shows one of the ways in which a plurality of sensor chips 21 are connected with the switch module 22 in the control device for floor tile screen. In other terms, the way of connecting a plurality of sensor chips 21 with the switch module 22 is not limited to the way that a plurality of sensor chips 21 on the same light panel 1 are connected with each other and then connected with the switch module 22 via pins on the light panel 1. It can also be that a plurality of sensor chips 21 on the same light panel 1 are connected directly with the switch module 22 via pins on the light panel 1, or that a plurality of sensor chips 21 on the same light panel 1 are connected in parallel and then connected with the switch module 22 via pins of the light panel 1. The connection ways are not specifically limited here.

In this embodiment, the sensor chip 21 can generate contact signals according to the contact state of the light panel 1. Further, when the light panel 1 is contacted, the sensor chip 21 at the corresponding position of the light panel 1 will generate contact signals. Meanwhile, the generated contact signals will be different with different contact strengths. That is, when a certain position on the light panel 1 is touched, the sensor chip 21 corresponding to the position will generate a corresponding contact signal.

A switch module 22 may include a switch chip. When the sensor chip 21 on each light panel 1 sends contact signals to the switch module 22, the switch module 22 sends contact signals of the sensor chip 21 on each light panel to the signal processing module 23 in sequence. Specifically, every time the switch module 22 switches, it can send contact signals of a plurality of sensor chip 21 on different light panel 1 to the signal processing module 23, i, e., through the switching action of the switch module 22, the contact signals of all sensor chip 21 on different light panel 1 can be sent to the signal processing module 23.

In some embodiments, the switch chip in the switch module 22 can be a chip with the model of CD4052. In this way, at most eight light panels 1 can be connected, and the display screens of eight light panels can be controlled simultaneously by the control device for floor tile screen.

The signal processing module 23 may include a Microcontroller Unit (hereinafter referred to as MCU). When the switch module 22 sends the contact signal of the sensor chip 21 on each light panel 1 to the signal processing module 23, the signal processing module 23 can analyze and process the contact signal to obtain the position of each sensor chip 21 and contact state of the position corresponding to the light panel 1, which would aggregate into an aggregated signal.

Specifically, after the signal processing module 23 obtains the contact signals of all sensor chip 21 on a certain light panel 1. The signal processing module 23 obtains the positions of all sensor chips 21 on all light panels 1 and the contact state of the position corresponding to each sensor chip 21 on the light panel 1 through analysis processing, and buffers the positions of the chips and the contact states of the positions corresponding to the sensor chips 21 of the light panel 1. Then the witch module 22 performs the switching action, and the signal processing module 23 receives the contact signals of all sensor chip 21 on another light panel 1. The above steps are repeated until the positions of all sensor chips 21 on all light panels 1 and the contact state of the position corresponding to each sensor chip 21 on the light panel 1 are obtained. The positions of all sensor chips 21 and contact states of the positions corresponding to the sensor chips 21 of the light panel 1 aggregate into an aggregated signal, which is sent to the light panel control module 24.

The light panel control module 24 can obtain the positions of all sensor chips 21 on all light panels 1 and the contact state of the position corresponding to each sensor chip 21 on the light panel 1 according to the aggregated signal sent by the signal processing module 23. According to the positions of all sensor chips 21 on all light panels 1 and the contact state of the position corresponding to each sensor chip 21 on the light panel 1, a control signal for controlling each light on each light panel 1 is obtained, and each light panel 1 is controlled to display the corresponding visual according to the control signal. It should be noted that the light panel control module 24 can directly or indirectly control each light panel 1 to display the corresponding visual.

In some embodiments, when the light panel control module 24 indirectly controls each light panel 1 to display the corresponding visual, the light panel control module 24 may include a receiving card, and the receiving card obtains the aggregated signal sent by the signal processing module 23. Then the aggregated signal is sent to the upper computer via a sending card, and the upper computer generates control signals according to the preset control rule and aggregated signal, and sends the control signals to the receiving card via the sending card. The sending card controls each light panel 1 to display a corresponding visual according to the control signals.

It should be noted that in this embodiment, according to the contact signal of a certain sensor chip 21, the contact strength of the position corresponding to the sensor chip 21 on the light panel 1 can be known. When the contact strength is different, the control signal controls the light panel 1 corresponding to the sensor chip 21 to display a different visual. Thus, rules for controlling the display visual should be preset. In addition, the way of connecting the light panel control module 24 to the light panel 1 may be electrical connection.

The application provides a control device for floor tile screen, which adopts a plurality of sensor chips 21, a switch module 22, a signal processing module 23 and a light panel control module 24, the switch module 22 generates a selection signal. And contact signals generated by the plurality of sensor chips 21 of the light panel 1 are sequentially sent to the signal processing module 23, which receives, buffers and identifies the contact signals. Then the position and contact state of each sensor chip 21 are obtained to generate an aggregated signal. The light panel control module 24 controls each light panel 1 to display visuals according to the aggregated signal, so that different display effects can be realized according to the contact state of each sensor chip 21. In this application, the signal processing module 23 and the switch module 22 are used to process the contact signal of each sensor chip 21, thus solving the problem that the control process of the floor tile screen in the prior art is complicated.

Furthermore, as an implementation of this embodiment, the sensor chip 21 is a capacitive sensor chip. For example, the sensor chip 21 may be a chip with the model number CY8C4014SXT.

In this embodiment, a capacitive sensor chip is used as the sensor chip 21, and when there is a slight change in the light panel 1, the capacitance value of the sensor chip 21 will change, so that the sensitivity of the floor tile screen is higher and the interactivity is stronger.

Furthermore, as an implementation of this embodiment, the signal processing module 23 includes a plurality of first switching pins, and the switch module 22 includes a plurality of second switching pins, the first switching pins are connected with the second switching pins in one-to-one correspondence.

In this embodiment, each second switching pin of the switch module 22 may output a high level or a low level. The high and low levels output by the plurality of second switching pins of the switch module 22 indicate that a contact signal of the sensor chip 21 on one of the plurality of light panels 1 is selected to be received.

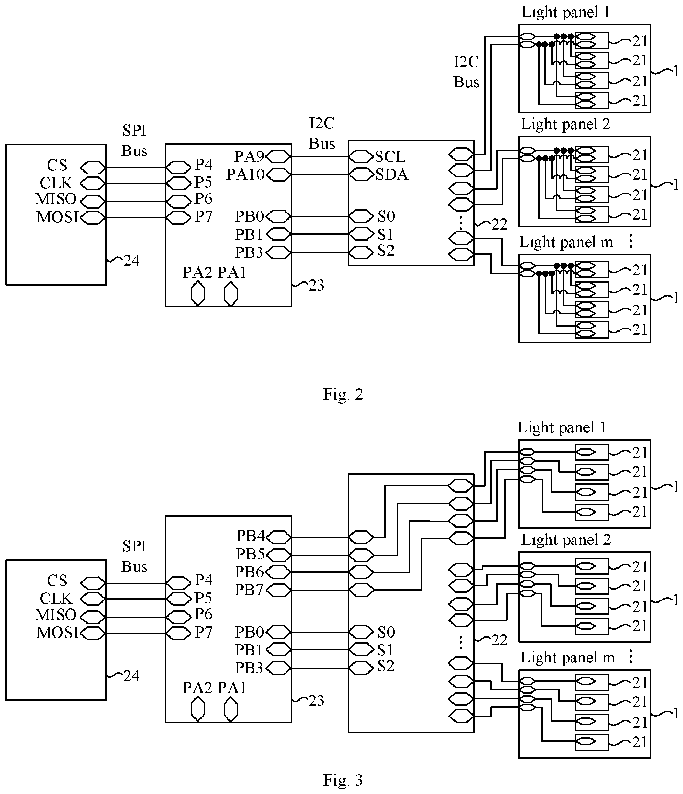

Specifically, as shown in Fig. 2, the signal processing chip in the signal processing module 23 may be a chip of model GD32E230. In this case, the first switching pins are pin PB0, pin PB1 and pin PB2, and the second switching pins are pin S0, pin S1 and pin S2. Pin PB0 is connected to pin S0, pin PB1 is connected to pin S1, pin PB2 is connected to pin S2. Pin PB0, pin PB1 and pin PB2 may output or receive high level or low level. In this case, switch module 22 is connected with at most eight light panels 1, as shown in Fig. 1 to Fig. 3. If the number of the light panels is m, m≤8, and m is a positive integer.

It should be noted that, as shown in Fig. 2, it is only one of the structural schematic diagrams of this embodiment, and it should not be taken as evidence to limit this application.

To better understand the technical content of this solution more clearly, an example is given below:
when pin PB0 is at low level, pin PB1 is at low level, and pin PB2 is at low level, the selection signal is "000", so that the signal processing module 23 receives the contact signal of the sensor chip 21 on the first light panel 1; when pin PB0 is at low level, pin PB1 is at low level and pin PB2 is at high level, the selection signal is "001", by switching the switch module 22, the signal processing module 23 would receive the contact signal of the sensor chip 21 on the second light panel 1, and so on, until the contact signals of all the sensor chip 21 on the light panel 1 are obtained.

Furthermore, as an implementation of this embodiment, the signal processing module 23 and the light panel control module 24 are connected via an SPI(Serial Peripheral Interface) bus.

Specifically, as shown in Fig. 2, the signal processing module 23 and the light panel control module 24 are connected by an SPI bus, which includes MISO (Master Input Slave Output), MOSI (Master Output Slave Input), SCLK (Serial Clock) and CS (Slave enable signal, controlled by master device, Chip Select).

By connecting the signal processing module 23 and the light panel control module 24 via the SPI bus, the signal processing module 23 and the light panel control module 24 are able to exchange information. The signal processing module 23 sends the aggregated signal to the light panel control module 24, so as to control the display visual of each light panel 1.

Furthermore, as an implementation of this embodiment, the light panel control module 24 includes pins for controlling the display visual of the light panel 1.

Specifically, in this embodiment, the pins used to control the display visual of the light panel 1 may be pins passing through the SPI bus, or pins set separately, which are not specifically limited here.

In this embodiment, the light panel control module 24 is provided with pins for controlling the display visual of the light panel 1, so that the light panel control module 24 can input control signals to the light panel 1, so as to control the display visual of each light panel 1.

Furthermore, as an implementation of this embodiment, an address code is set in the sensor chips 21, and address code in different sensor chips 21 on the same light panel 1 is different.

Specifically, the address codes of different sensor chips 21 on the same light panel 1 are different, i. e., the address code of each sensor chip 21 on the light panel 1 may be the same or different, which is not specifically limited here. For example, there are four sensor chips 21 on a same light panel 1, and the address codes of the four sensor chips 21 may be 0x08, 0x18, 0x28 and 0x28.

It should be noted that the address code may be fixed into the sensor chip 21 through a program, and the program of the sensor chip 21 with different code address is also different.

In this embodiment, by setting an address code in each sensor chip 21, and the address codes in different sensor chips 21 on the same light panel 1 are different, the signal processing module 23 can distinguish the sensor chips 21 when accessing each sensor chip 21, so as to facilitate the position discrimination of the sensor chips 21 subsequently.

Furthermore, as an implementation of this embodiment, each light panel 1 is connected with an I2C bus, and a plurality of sensor chips 21 on the same light panel 1 are connected in parallel and then connected with the switch module 22 via the I2C bus.

As shown in Fig. 2, a plurality of sensor chips 21 on the same light panel 1 are connected in parallel, and then connected with the switch module 22 via the I2C bus.

In this embodiment, all the sensor chips 21 on the same light panel 1 are connected in parallel, and send contact signals to the switch module 22 via the I2C bus.

In addition, it should be noted that when a plurality of sensor chips 21 on the same light panel 1 are connected in parallel and then connected with the switch module 22 via I2C bus, the switch module 22 and the signal processing module 23 should also be connected via I2C bus, i. e., the contact signal of each sensor chip 21 is sent to the signal processing module 23 via I2C bus.

In this embodiment, all the sensor chips 21 on the same light panel 1 are connected in parallel, and the contact signals are sent to the switch module 22 via the I2C bus, which can improve the pin utilization rate of the switching chips in the switch module 22 and reduce the line connection.

Further, as an implementation of this embodiment, the access frequency of the signal processing module 23 to each sensor chip 21 is 5 Hz ~ 20 Hz.

It should be noted that the method by which the signal processing module 23 accesses the sensor chip 21 on each light panel 1 is similar to the method by which the signal processing module 23 buffers the contact signals of the sensor chip 21 on each light panel 1. They are all switched by the switch module 22, and each time it accesses one sensor chip 21 on a certain light panel 1 until it has accessed all the sensor chips 21 on the light panel 1. The method of buffering the contact signals of the sensor chips 21 on each light panel 1 by the signal processing module 23 has been described in detail above, thus will not be repeated here.

In this embodiment, the higher the access frequency of the signal processing module 23 to each sensor chip 21, the better the display effect of the floor tile screen and the stronger the interactivity.

Furthermore, as an implementation of this embodiment, each light panel 1 is provided with a plurality of I/O pins, and each sensor chip 21 is connected with the switch module 22 via one I/O pin.

Specifically, in this embodiment, as shown in Fig. 3, taking the signal processing chip in the signal processing module 23 as an example, the sensor chip 21 on each light panel 1 is connected with the switch module 22 through the interface on the light panel 1, and the sensor chips 21 on the same light panel 1 is not necessarily to be connected in parallel. Meanwhile, since the I2C bus is not used in this case, it is not necessary to fixedly set the address code in each sensor chip 21.

In addition, it should be noted that when each light panel 1 is provided with a plurality of I/O pins and each sensor chip 21 is connected with the switch module 22 via one I/O pin, the switch module 22 and the signal processing module 23 should also be connected via an I/O line. That is, the contact signals of all the sensor chip 21 are sent to the signal processing module 23 via the I/O line.

In this embodiment, each light panel 1 is provided with a plurality of I/O pins, and each sensor chip 21 is connected with the switch module 22 via one I/O pin, so that the signal processing module 23 can obtain the position of each sensor chip 21 on the light panel 1 without setting an address code in each sensor chip 21.

Furthermore, as an implementation of this embodiment, the signal processing module 23 includes pins for connecting with a running light and a touch-sensing light.

Specifically, in this embodiment, the pin for connecting with the running light is pin PA1, and the pin for connecting with the touch-sensing light is pin PA2.

When the floor tile screen is in working state, the signal processing module 23 controls the pin PA1 to output a level signal, so that the running light is on.

When the sensor chip 21 arranged at a certain position on the light panel 1 is touched, the contact signal of the sensor chip 21 would be sent to the signal processing module 23 through the switch module 22, and the signal processing module 23 controls the pin PA2 to output a level signal, so that the touch-sensing light is on.

In this embodiment, by setting pins for connecting with the running light and touch-sensing light in the signal processing module 23, the pins are connected with the running light and touch-sensing light, so as to provide indications to the user of the floor tile screen.

The above embodiments are only used to illustrate the technical solution of this application, rather than limiting it. Although the application has been described in detail with reference to the aforementioned embodiments, those of ordinary skill in the art should understand that the technical solutions described in the aforementioned embodiments may still be modified, or some of the technical features may be equivalently replaced. However, these modifications or substitutions do not make the essence of the corresponding technical solutions deviate from the spirit and scope of the technical solutions of each embodiment of this application, and shall be included in the protection scope of the present application.

## Claims

1. A control device for floor tile screen, comprising: a sensor chip, a switch module, a signal processing module and a light panel control module connected in sequence; wherein a plurality of sensor chips are arranged, and the plurality of sensor chips are arranged on each light panel, the light panel control module is connected with the light panel;
the sensor chip is used for generating a contact signal according to a contact strength of the light panel; the switch module is used for switching the contact signal received by each sensor chip according to a selection signal generated; the signal processing module is used for receiving, buffering and identifying the contact signal so as to generate an aggregated signal containing position and contact state of each sensor chip; the light panel control module is used for controlling each light panel to display visuals according to the aggregated signal; and
a light panel control circuit is formed by the plurality of sensor chips, the switch module, the signal processing module and the light panel control module.

2. The control device for floor tile screen of claim 1, wherein the sensor chip is a capacitive sensor chip.

3. The control device for floor tile screen of claim 2, wherein the signal processing module comprises a plurality of first switching pins, and the switch module comprises a plurality of second switching pins, the plurality of first switching pins are connected with the plurality of second switching pins in one-to-one correspondence.

4. The control device for floor tile screen of claim 2, wherein address code is provided in the sensor chip, and address codes in different sensor chips of the same light panel are different.

5. The control device for floor tile screen of claim 4, wherein each light panel is connected with an I2C bus, and the plurality of sensor chips of the same light panel are connected in parallel and then connected with the switch module via the I2C bus.

6. The control device for floor tile screen of claim 5, wherein the signal processing module accesses each sensor chip at an access frequency of 5 Hz ~ 20 Hz.

7. The control device for floor tile screen of claim 3, wherein each light panel is provided with a plurality of I/O pins, and each sensor chip is connected with the switch module via one I/O pin.

8. The control device for floor tile screen of claim 1, wherein the signal processing module and the light panel control module are connected via an SPI bus.

9. The control device for floor tile screen of claim 1, wherein the light panel control module comprises a pin for controlling the light panel to display visuals.

10. The control device for floor tile screen of claim 1, wherein the signal processing module comprises pins for connecting with a running light and a touch-sensing light.

11. The control device for floor tile screen of claim 10, wherein the sensor chip is a capacitive sensor chip.

12. The control device for floor tile screen of claim 11, wherein the signal processing module comprises a plurality of first switching pins, and the switch module comprises a plurality of second switching pins, the plurality of first switching pins are connected with the plurality of second switching pins in one-to-one correspondence.

13. The control device for floor tile screen of claim 11, wherein address code is provided in the sensor chip, and address codes in different sensor chips of the same light panel are different.

14. The control device for floor tile screen of claim 13, wherein each light panel is connected with an I2C bus, and the plurality of sensor chips of the same light panel are connected in parallel and then connected with the switch module via the I2C bus.

15. The control device for floor tile screen of claim 14, wherein the signal processing module accesses each sensor chip at an access frequency of 5 Hz ~ 20 Hz.

16. The control device for floor tile screen of claim 12, wherein each light panel is provided with a plurality of I/O pins, and each sensor chip is connected with the switch module via one I/O pin.

17. The control device for floor tile screen of claim 10, wherein the signal processing module and the light panel control module are connected via an SPI bus.

18. The control device for floor tile screen of claim 10, wherein the light panel control module comprises a pin for controlling the light panel to display visuals.
